# EUROPEAN PATENT APPLICATION

(11) **EP 2 530 960 A1**
(43) Date of publication of application: **05.12.2012**
(21) Application number: 11380048.6
(22) Date of filing: 01.06.2011
(51) Int. Cl.: H04W 8/18

(54) **Remote provisioning of sim's/usim's cards at run-time by a mobile operator**

(71) Applicant: Martin Peinado, Jose-Luis, 47012 Valladolid (ES)
(72) Inventor: Martin Peinado, Jose-Luis, 47012 Valladolid (ES)

(57) **Abstract**

A hardware and software design for SIM/USIM cards and HLR/AuC and method that allows a mobile operator to provision user subscription parameters while the SIM/USIM is in use in a mobile device or modem. The method requires a modified HLR/AuC node or an external functional entity on the network of the operator (as an example) including the capability to encode and communicate SIM/USIM subscription parameters to the SIM/USIM device in use. This method is extensible enough to communicate multiple parameters apart from the minimum required SIM/USIM provision parameters of IMSI and Ki of the mobile subscription.

## Description

### 1. Field of invention

The present invention relates to a new method to use SIM/USIM cards in mobile devices for GSM/UMTS mobile networks. This method enables SIM/USIMs to be provisioned or re-provisioned with new mobile subscriptions during its lifetime and while mobile devices are being operated and running.

### 2. Description of Background Art

In telecommunication networks, Subscriber Identity Module (SIM) / UMTS Universal Subscriber Identity Module (USIM) cards are used to authenticate subscriptions and to control access to mobile networks by mobile devices to which they are coupled.

SIM/USIM cards are usually associated with a single user subscription. Several patents (CN 1585533A, US 2010240414A1, US 2010041438A1, CN 101674567A, CN 101673220A, WO 2005015802A2) solve the need of having multiple mobile subscriptions associated with a single SIM/L1SIM card. Solutions range from having multiple physical SIMs attached to a single mobile device/modem to multiple logical subscriptions within a physical SIM card and different types of switching mechanisms allowing to select the desired subscription to be used when accessing mobile network. In all these solutions subscriptions are pre-generated and stored within the SIMs modules, but not generated by the mobile operator while SIMs are at run-time.

Regarding the need of transferring subscription data between different SIM/USIM cards, CN 201365344Y proposes a method to locally transfer SIM subscription data locally.

Additionally, a driver to change subscriptions in SIMs while at run-time arises when considering remote modems in M2M scenarios and the malicious use of stolen SIM cards (EP 2229019A1). Also for M2M applications in inter-operator scenarios, 3GPP TS 33.812 outlines some alternative methods to remotely redefine user subscriptions in SIM/USIM devices based on solutions requiring additional nodes within the mobile network for OTA purposes, like a 'Download and Provisioning Function' (DPF), additional logic to be included in M2M modems and SMS or IP connectivity bearers to be enabled for subscription data communication.

Although previously cited works are focused on the problem of switching between different GSM/UMTS subscriptions or redefining subscription data, either they are not functionally acceptable for remote provision by mobile operators, or they are not completely defined and they require important changes within the mobile networks architecture and mobile devices making them too costly.

The disclosed embodiments provide a novel and new method of hardware and software design for SIM/USIM cards that allows mobile operators to remotely define/redefine subscription data without impacting existing GSM/UMTS network protocols, or modems/mobile devices to which they are attached, or requiring any type of modification on itinerant mobile networks to provide the previously stated functionality.

This new method requires modifications in the software design of the HLR/AuC node within the home GSM/UMTS network of the SIM/USIMs that need to be provisioned/reprovisioned to be able to communicate new subscription data when a subscription has to be updated.

### 3. Brief description of the drawings

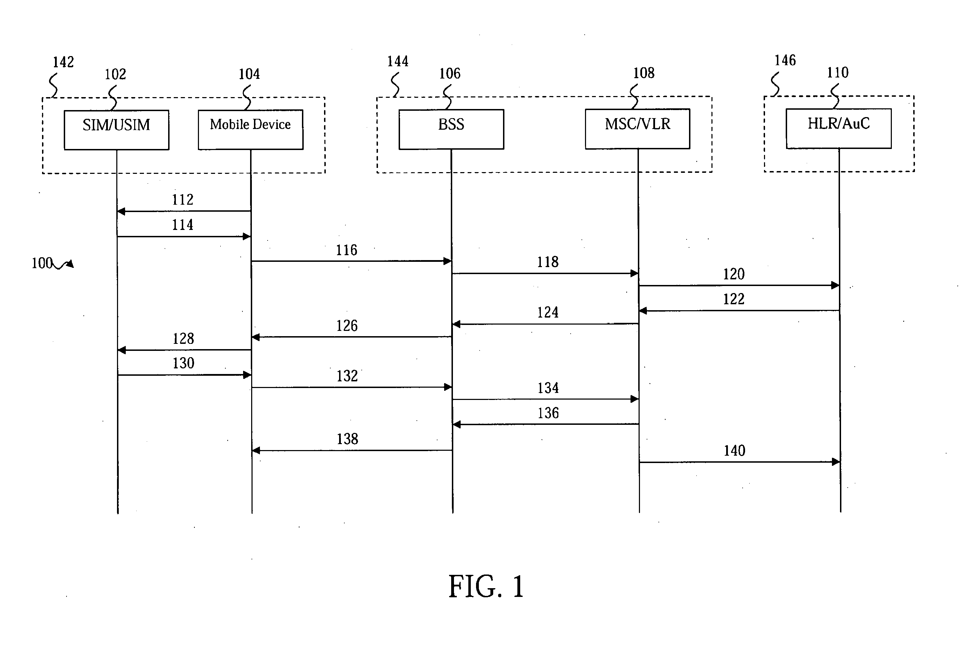

**Figure 1** is a flow diagram 100 of the registration process in a GSM/UMTS mobile network performed by a mobile device 104 with an attached SIM/USIM card 102. Registration process is initiated from a visited mobile network 144 comprising a Base Station Subsystem (BSS) 106, and a Mobile Switching Center (MSC)/ Visitor Location Register (VLR) 108, requiring to access the Home Location Register (HLR) 110 of the home network 146 of the mobile subscriber for authorization and authentication purposes.

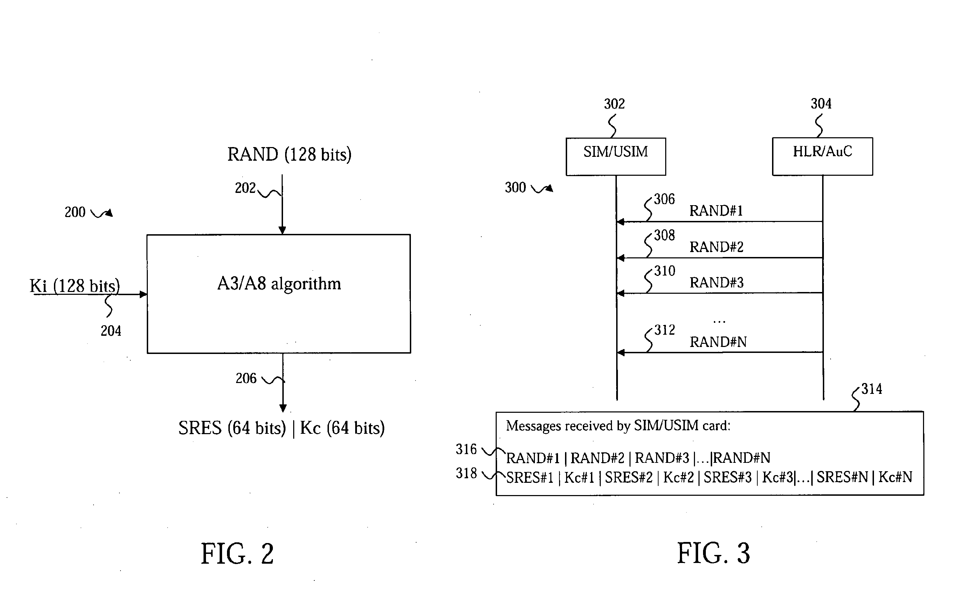

**Figure 2** is a block diagram 200 of the A3/A8 GSM/UMTS standard cipher algorithm (symmetric key algorithm) that transforms a input number of 128 bits (RAND) 202 into an output number of 128 bits (usually represented as two numbers of 64 bits, SRES and Kc) 206 by using a secret key Ki 204 shared by the HLR/AuC of a home network and the SIM/USIM card of a mobile subscriber.
**Figure 3** is a flow diagram 300 that depicts the process of using multiple registration processes from a mobile device in a mobile network as information bearer from the HLR/AuC 304 to the SIM/USIM card 302 to communicate multiple messages RAND#1, RAND#2 ... RAND#N 306 308 310 312 that can be assembled into the desired lenght RAND#1 | |RAND#2 | RAND#3 ...
RAND#N message 316 and the ciphered SRES#1 | Kc#1 | SRES#2 | Kc#2| SRES#3 | Kc#3|...| SRES#N | Kc#N message 318 after using A3/A8 algorithm with Ki for each input RAND#N value in the SIM/USIM card 302.

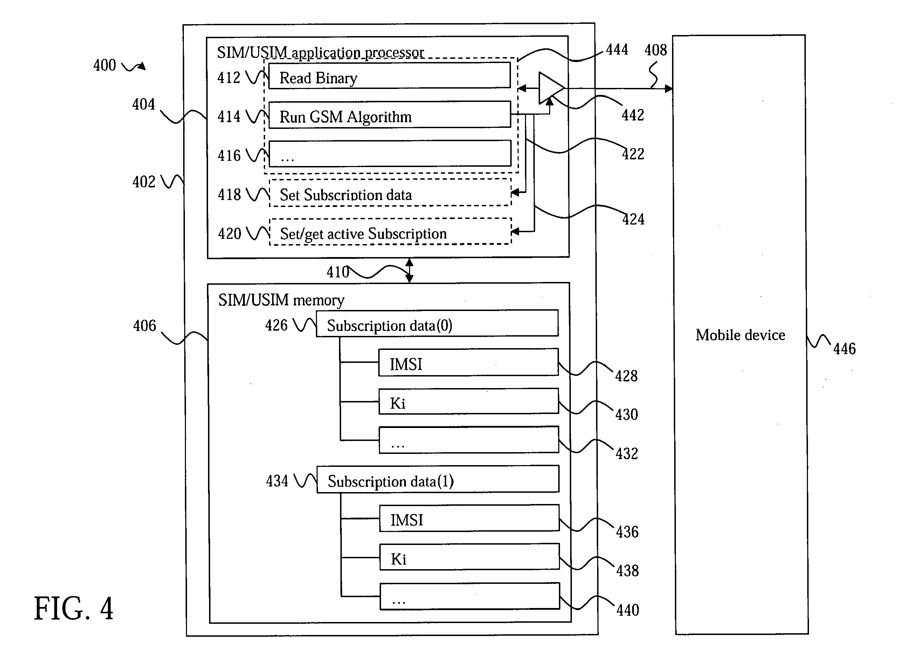

**Figure 4** is a block diagram 400 of a GSM/UMTS mobile device 446 with a SIM/USIM card 402 attached to it through an ISO 7816 physical-electrical interface implementing the standard GSM/UMTS SIM Application Toolkit interface for commands 408. The SIM/USIM card 402 includes a processor running SIM/USIM application logic 404 that is connected 410 to a non-volatile readable and writable random access memory 406 in which two (but not limited to) sets of subscription data parameters are stored 426 434.

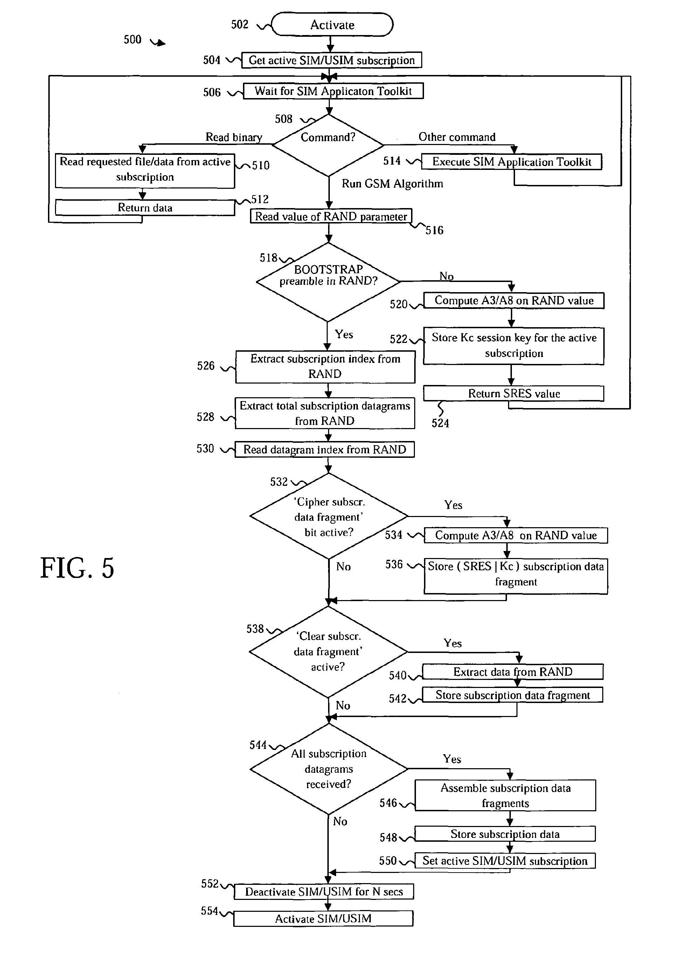

**Figure 5** is a flow diagram 500 that depicts software logic of the SIM/USIM application processor that allows GSM/UMTS subscription data to be changed.

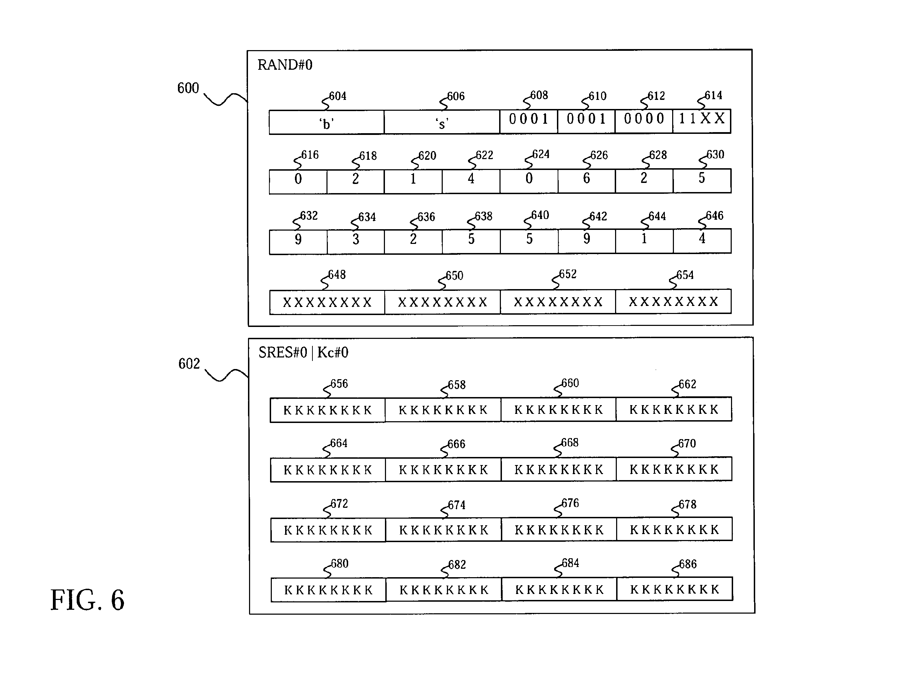

Figure 6 is an example of the encoding of GSM/UMTS subscription data information within RAND 600, SRES | Kc 602 parameters of an HLR/AuC authentication tuple.

### 4. Detailed description

In GSM/UMTS communication networks, SIM and USIM cards are used to store mobile subscriber information used during operation of mobile devices / modems they are attached to for identification, authentication and access control purposes.

Each mobile subscriber in GSM/UMTS networks is assigned an International Mobile Subscriber Identity number (IMSI) and secret key (Ki) for authentication and other parameters that are stored in SIM/USIM modules. For the purpose o the present invention, only these two user data parameters (IMSI, Ki) will be used to characterize a GSM/UMTS subscription, although the method proposed is not limited to them, allowing to provision additional user subscription data parameters to the SIM/USIM card.

In normal operation, GSM/UMTS mobile devices perform the following operations when attaching to the network from a visited (itinerant) network as shown in **Figure 1**:
a. The mobile device 104 requests 112 and reads 114 the IMSI number from the SIM/USIM 102 card attached to it.
b. The mobile device 104 obtains channel with the local Base Station Subsystem (BSS) 106 and sends a Location Update Request (LOC_UPD_REQ in GSM) 116 including an IMSI number to the BSS 106, that typically will be acknowledged (not shown in flow diagram).
c. The BSS 106 forwards the Location Update Request 118 to the Mobile Switching Center (MSC)/ Visitor Location Register (VLR) 108.
d. The MSCNLR 108 forwards the IMSI to the (Home Location Register) HLR/ Authentication Center(AuC) 110 and requests verification of the IMSI as well as a set of authentication triplets 120 as defined for Authentication and Key Agreement (AKA) procedures in GSM/UMTS.
e. The HLR/AuC 110 will produce a set of authentication triplets for the IMSI number received and will forward them 122 to the MSCNLR 108 if the user is allowed by the network. These authentication triplets include SRES, Kc and RAND values that are used for authentication of the mobile subscriber. A3/A8 cryptographic procedure is used to produce them as shown in **Figure 2**.
f. The MSCNLR 108 stores the SRES and the Kc parameters and forwards 124 the RAND to the BSS 106 and orders the BSS 106 to authenticate the mobile device 104.
g. The BSS 106 sends the mobile device 104 an Authentication Request (AUTH_REQ) message 126. The only parameter sent in the message is the RAND.
h. The mobile device 104 requests 128 to the SIM/USIM 102 card to perform a authentication procedure (RUN GSM ALGORITHM) using the RAND parameter to obtain the SRES 130 and sends the SRES back to the BSS 106 in an Authentication Response (AUTH_RSP) 132. The SIM/USIM performs SRES calculation based on A3/A8 algorithm as shown in **Figure 2**.
i. The BSS 106 forwards 134 the SRES up to the MSCNLR 108. The MSCNLR 108 compares the SRES generated by the AuC with the SRES generated by the mobile device 104. If they match, then authentication is completed successfully.
j. Additional procedures using Kc parameter are performed to cipher air interface between the BSS 106 and mobile device 104 that are out of scope for the present invention (not represented in **Figure 1**) that allow the device to access GSM/UMTS services.
k. The MSCNLR 108 sends a Location Updating Accept (LOC_UPD_ACC in GSM) message 136 to the BSS.
l. The BSS 106 instructs the mobile device 104 to go into idle mode by sending it a Channel Release (CHAN_REL) message 138 and deassigns the initially assigned channel.
m. The MSCNLR 108 sends an Update Location message 140 to the HLR 110 so the mobile device 104 it is localizable from the home network 146 for further communications and use of mobile services.

The disclosed method and hardware/software design reuses communication process shown in **Figure 1** by repeating it in a sequential form (if needed), so the registration procedure can be seen at an abstract level as an information bearer in itself from the HLR to the SIM/USIM card and the sequential RAND values (and ciphered SRES and Kc values the message to communicate between them as depicted in **Figure 3**.

Hardware design of the SIM/USIM card presented in present invention is shown in Figure 4. The SIM/USIM card 402 must include standard GSM/UMTS SIM application toolkit commands 444 implemented as part of the program logic of the SIM application processor 404. The SIM/USIM application processor 404 will receive commands from the mobile device 446 and will return data through the standard ISO 7816 physical-electrical interface 408. Also, the SIM/USIM application processor 404 will be connected to a non-volatile readable and writable random access memory 406 that will store different sets of subscription data parameters 426 434 as well additional parameters required by GSM/UMTS standards (not represented in the diagram). Memory 406 must be accessible by program logic of the SIM application processor 404 for read and write operations.

GSM/UMTS SIM application toolkit commands 444 implemented by the program logic of the SIM application processor 404 include different commands: to read data 412 from memory, perform GSM/UMTS cryptographic procedures during authentication 414 to calculate Kc and SRES parameters and additional commands 416 that are out of the scope of the present invention. The SIM/USIM application processor will include also additional logic when modifying 418 or detecting or activating 420 active user subscription data sets 426 434. Set Subscription 418 and Set/Get active Subscription 420 functions will not be directly accessible through the communication interface 408 with the mobile device 446 but from the standard RUN GSM Algorithm function 414.

At least (but not limited to) two sets of subscription data parameters 426 434 must be able to be stored in the SIM/USIM memory 406. More specifically, these sets of parameters 426 434 must be able to store simultaneously at least an initial set of subscription data parameters 426 and a new set of subscription data parameters 434. When the SIM/USIM card is operating, only one of these sets will be accessible for standard SIM Application Toolkit commands from the mobile device 446 at each time.

SIM/USIM card 402 must include a programmable mechanism 442 (controlled by the SIM/USIM application processor 404) to logically/electrically disconnect the SIM/USIM card 402 from the mobile device 404 (for example, but not limited to a three state gate able to force a high impedance state in all its pads during a period and returning to normal state). As an alternative, when considering SIM-less mobile devices in which SIM/USIM application is part of the mobile device logic, disconnection of SIM/USIM card will have to be simulated as a software event to produce disconnection from mobile device.

HLR/AuC node of the home operator of SIMs that are to be provisioned remotely must include specific software design as defined in following statements:
a. A new parameter for each subscription in HLR/AuC will mark them as 'in process of re-provision'. For these subscriptions an additional parameter with the new IMSI number and additional parameters to be assigned for the subscription will be stored or referenced from the actual subscription information data.
b. HLR/AuC must be able to produce and send to MSCNLR sets of multiple Authentication Triplets in a predetermined order.
c. Whenever a MAP/D UPDATE LOCATION is received from a MSC/VLR, apart from updating the currently serving MSC address, HLR/AuC must check if the IMSI value received in the request is one marked as 'in process of re-provision':
   c.1. If IMSI value received is not marked as 'in process of re-provision' HLR/AuC must produce authentication tuples RAND, SRES, Kc and will send them to the MSC/VLR in a MAP/D INSERT SUBSCRIBER DATA command, following standard GSM/UMTS procedure.
   c.2. If IMSI value received is marked as 'in process of re-provision' the HLR must read new IMSI number and additional parameters of the new GSM/UMTS subscription, and will compose authentication tuples including (but not limited to): bootstrap preamble, datagram/subscription index parameters and new GSM/UMTS subscription data. An example of authentication tuple carrying subscription data information is shown in **Figure 6****.** Subscription data as a sequence of one or more tuples (RAND, SRES, Kc) must be sent to the MSCNLR in MAP/D INSERT SUBSCRIBER DATA commands.
d. The process of marking / unmarking subscriptions in HLR/AuC as 'in process of re-provision' is an administrative process performed by the mobile operator.

**Figure 5** describes logic that enables the communication and modification of GSM/UMTS subscription data parameters in the SIM/USIM as part of a GSM/UMTS registration procedure. When the SIM/USIM card is physically connected to a mobile device 502, the SIM/USIM will read from non volatile memory the index of the active SIM/USIM subscription 506 and will wait and read SIM Application Toolkit commands from the mobile device it is attached to. When commands requiring access to GSM/UMTS subscription data (as an example, Read Binary command is described), the SIM/USIM will use previously retrieved index of the active SIM/USIM subscription to access the specific information in SIM/USIM memory related to the active subscription 510 and return its value 512. Other commands 514 requested through the SIM Application Toolkit interface by the mobile device must execute standard GSM/UMTS logic for the received command accessing information from active subscription in SIM/USIM memory if needed.

When a GSM/UMTS network 'Run GSM Algorithm' command is received from the mobile device, the SIM/USIM card must retrieve the RAND value included as a parameter 516 and check if a BOOTSTRAP preamble word is included at the start of the RAND value 518. If BOOTSTRAP preamble word is not included at the start of the RAND value standard GSM/UMTS logic for the command must be performed: A3/A8 cryptographic algorithm must be used to calculate SRES and Kc values 520, Kc session key must be stored for the active subscription 522 and SRES value must be returned to the mobile device as result of the 'RUN GSM Algorithm' 524. If BOOTSTRAP preamble word is found at the start of the received RAND, the SIM/USIM card logic must decode additional parameters from the RAND value: the subscription data index in which subscription data will be stored 526, the total number of RAND values (fragments) used to carry all subscription data information 528 and the index of present RAND value (fragment) within the complete message carrying subscription information 530. The SIM/USIM card logic must check the 'Cipher subscription data fragment' bit in the RAND value is active 532. If the bit is active, data resulting of executing A3/A8 algorithm 540 must be used as subscription data fragment with the signaled index and stored in non-volatile memory 542. This feature can be used to send secret keys like a new Ki value that will not be sent in clear through the air interface between the mobile network and the mobile device. The SIM/USIM card logic must then check if the 'Clear subscription data fragment' bit in the RAND value is active 534. If the bit is active, RAND value as a datagram excluding BOOTSTRAP preamble word, subscription data index, total number of fragments, index of present fragment, 'Cipher subscription data fragment' and 'Clear subscription data fragment' must be used as subscription data fragment 540 with the signaled index and stored in non-volatile memory 542.

When ciphered and clear subscription data from a RAND value (fragment) is stored, SIM/USIM card logic must check if all fragments have been received 544 in previous executions of the 'Run GSM algorithm' command. To do so, it must check that fragments for all indexes from 0 to the total number of RAND values (fragments) minus one used to carry subscription are stored. If not, additional RAND values from the HLR/AuC have to be received and processed (repeating process from the activation of the SIM/USIM 502): the SIM/USIM card logic will perform a deactivation simulating a physical/electrical disconnection from the mobile device during a configurable period of time 552 and then will activate again simulating a physical/electrical connection to the mobile device 554 that will trigger logic from the start of the algorithm 502, forcing a new mobile network registration and the transmission of a new RAND value carrying an additional subscription data fragment as many times as needed.

If all subscription data fragments have been received and stored by the SIM/USIM card logic, it must assemble all fragments 546 to conform all subscription data information. Concrete mapping of each subscription data fragment to subscription data parameters/files in the SIM/USIM memory is not limited by present procedure. All GSM/UMTS subscription data must be stored in the subscription data store of the index requested previously in RAND 548, and the subscription index received must be set as the active SIM/USIM subscription index that will apply next times the SIM/USIM is activated 550. Finally, the SIM/USIM card logic must deactivate itself during a period of time 552 and activate 554 to force the use of the new GSM/UMTS subscription.

**Figure 6** presents an example of RAND#0 message 600 sent by the HLR during the registration to re-define SIM/USIM subscription parameters and the result of using A3/A8 algorithm over it 602. In this example, only IMSI number and Ki are remotely provisioned although the method of communication used and described in **Figure 3**. Multiple RAND messages could be used if additional subscriber information to be sent to the SIM/USIM card. Also, in this example it is assumed that only Ki secret key must be securely transmitted (ciphered in the air interface) to the mobile device and can be freely chosen by the HLR, while the IMSI number can be sent in clear from the HLR to the SIM/USIM card. The method and hardware/software design presented can be used in a form in which all subscription data from HLR to SIM/USIM card is encrypted if required (for example but not limited to, by using Kc key obtained in an initial registration procedure by the SIM/USIM card to cipher subsequent messages into RAND values with the A5 algorithm). RAND#0 value 600 informs that the network intends to re-provision SIM/USIM card by including BOOTSTRAP preamble 8 bit words 604 606; 4 bit length word 608 indicates that subscription data set index 608 in which the information is desired to be stored in SIM/USIM memory is #1 for this example; 4 bit length word 610 shows that the total number of subscription data fragments to be received is 1 for this example; and 4 bit length word indicates that the subscription data fragment index for this RAND#0 value 600 is 0 for this example. Most significant bit of 4 bit length word 614 indicates if the ciphered information resulting of applying A3/A8 algorithm by the SIM/USIM card is data used to compose subscription information. In this example, SRES#0|Kc#0 value stores Ki of the new subscription. Second most significant bit of word 614 indicates if the RAND#0 value 600 includes valid clear data regarding the new subscription. In this example, following 4 bit length words 616 618 620 622 624 626 628 630 632 634 636 638 640 642 644 646 of the RAND#0 value 600 carry IMSI value of the new subscription to be stored and activated in binary coded decimal format. The rest of 8 bit length words 648 650 652 654 of the RAND#0 value 600 are not needed for this example, and could be random values.

## Claims

1. A method for remote provisioning by a GSM/UMTS mobile operator of user subscription parameters stored in a SIM/USIM while it is in use, the method comprising the steps of: registering in the mobile network; producing specific GSM/UMTS authentication tuples with subscription data by the home network HLR/AuC node; processing and storing information received from authentication tuples and setting a new active subscription by the SIM/USIM.

2. An apparatus for remote provisioning of user subscription parameters stored in a SIM/USIM by a GSM/UMTS mobile operator while it is in use, the apparatus comprising:
a SIM/USIM card able to read and store multiple GSM/UMTS subscription data sets, activate and use a concrete GSM/UMTS data set, detect and process specific GSM/UMTS authentication tuples during network registration of the mobile device it is attached to with one or more subscription data fragments, assemble subscription data fragments and store them as a GSM/UMTS subscription data set, and electrically connect and disconnect from the mobile device it is attached via programmable logic;
a HLR/AuC network node able to produce specific GSM/UMTS authentication tuples indicating that a subscription is to be re-provisioned, fragment subscription data in one or more authentication tuples, produce and deliver them in sequential order.

3. The method of claim 1 wherein subscription data is carried in RAND values used to authenticate SIM/USIM user subscription as a result of a Location Update procedure (LOC_UPD_REQ in GSM) triggered from the mobile device when a valid SIM/USIM card is inserted.

4. The method of claim 1 wherein the user subscription parameters includes at least an IMSI number and a Ki key.

5. The method of claim 1 wherein the GSM/UTMS authentication tuples are used to carry simultaneously clear and ciphered subscription data parameters simultaneously by using GSM A3/A8 cipher algorithm in the HLR/AuC node and the SIM/USIM card to share a secret value.

6. The apparatus of claim 2 wherein the SIM/USIM card is able to store two GSM/UMTS subscription data sets, one for present network access, and one for the new subscription to be provisioned.

7. The apparatus of claim 2 wherein the SIM/USIM card is attached to a modem device instead to a mobile device.

8. The apparatus of claim 2 wherein the SIM/USIM card is a software logic module within the mobile device/modem processor or as an additional processor (soft-SIM) in which programmable electrical connection/disconnection from the mobile device is simulated by software.

9. The apparatus of claim 2 wherein the SIM/USIM card is able to detect if clear and/or ciphered subscription data fragment

10. The apparatus of claim 2 wherein the SIM/USIM card is able to detect the total number of subscription data fragments to be delivered for the complete subscription data set, and to map these fragments into a single subscription data set.
